# EUROPEAN PATENT APPLICATION

(11) **EP 3 346 364 A1**
(43) Date of publication of application: **11.07.2018**
(21) Application number: 18150380.6
(22) Date of filing: 04.01.2018
(51) Int. Cl.: G06F 1/16, G06F 3/01, G06F 1/32

(54) **ADAPTIVE POLYHEDRAL DISPLAY DEVICE**

(30) Priority: 05.01.2017 US 201715399261
(71) Applicant: Honeywell International Inc., Morris Plains, NJ 07950 (US)
(72) Inventor: PATIL, Amit, Morris Plains, New Jersey 07950 (US); MUKHERJEE, Animesh, Morris Plains, New Jersey 07950 (US); VERMA, Anjali, Morris Plains, New Jersey 07950 (US); H V, Vivek, Morris Plains, New Jersey 07950 (US); ANNAMARAJU, Jyothi, Morris Plains, New Jersey 07950 (US); SIVARAJAN, Sareesh, Morris Plains, NJ New Jersey 07950 (US); MULAY, Satish, Morris Plains, NJ New Jersey 07950 (US); SINGH, Gurtaj, Morris Plains, NJ New Jersey 07950 (US); GUPTA, Parag, Morris Plains, NJ New Jersey 07950 (US)
(74) Representative: Houghton, Mark Phillip

(57) **Abstract**

An adaptive polyhedral display device includes at least at least N-number of display devices, a location sensor, and a display system. Each display device is coupled together to form a polyhedron structure that has at least (N+1) sides and an inner volume. Each display device includes a touch sensitive display and an associated display controller, and each touch sensitive display at least partially defines a different one of the sides of the polyhedron structure. The location sensor is disposed within the inner volume, and is configured to sense a location of the polyhedron structure. The display system processor is disposed within the inner volume and is configured to individually communicate with each one of the display controllers and, in response to the location data, to command each display controller to render, on its associated touch sensitive display, a user interface associated with a sensed location.

## Description

### TECHNICAL FIELD

The present invention generally relates to display devices, and more particularly relates to a polyhedral display device that is user and/or location adaptive.

### BACKGROUND

There are (and have been) numerous and varied electronically controllable devices on the market. Many of these devices are accompanied by a remote control (i.e., "a remote"), many of which include or generate a user interface (e.g., a graphical user interface (GUI)) that is customized for the device being controlled. This has inevitably led to many users owning several different remotes, each with different user interfaces. Even universal remotes generated GUIs with navigational patterns that may have steep learning curves due, in part, to the multi-layered architecture. This can lead to user frustration when a desired task cannot be found via the GUI. Users have to memorize the navigation patterns needed to access each function and have to change modes or contexts to work on different functional components.

For example, assume a user is controlling a video component using a remote, and that the user wants to adjust the lighting in his/her environment. To do so, the user has to navigate away from the video control functionality to the appropriate lighting control functionality. After the user has adjusted the lighting, they must then navigate back to the video control function. Moreover, many known remotes do not adapt to location and/or based on varied user preferences.

In the context of an aircraft, existing cabin control interface devices have to be either stowed or permanently attached to the aircraft structure. The devices are not portable and adaptable to various environments. Moreover, because these devices must meet certification requirements and are customized only to the specific aircraft types, the devices are relatively costly.

Hence, there is a need for a display device that is readily navigable, that is adaptable to location, that is adaptable to varied user preferences, and that can be readily carried on and off of an aircraft and can be interfaced with certain aircraft cabin control systems. The present invention addresses at least these needs.

### BRIEF SUMMARY

This summary is provided to describe select concepts in a simplified form that are further described in the Detailed Description. This summary is not intended to identify key or essential features of the claimed subject matter, nor is it intended to be used as an aid in determining the scope of the claimed subject matter.

In one embodiment, an adaptive polyhedral display device includes at least at least N-number of display devices, a location sensor, and a display system. Each display device is coupled together to form a polyhedron structure that has at least (N+1) sides and an inner volume. Each display device includes a touch sensitive display and an associated display controller, and each touch sensitive display at least partially defines a different one of the sides of the polyhedron structure. The location sensor is disposed within the inner volume, and is configured to sense a location of the polyhedron structure and supply location data indicating the location. The display system processor is disposed within the inner volume and is in operable communication with each display controller and is coupled to receive the location data from the sensor. The display system processor is configured to individually communicate with each one of the display controllers and, in response to the location data, to command each display controller to render, on its associated touch sensitive display, a user interface associated with a sensed location.

In another embodiment, an adaptive polyhedral display device includes at least five display devices, a location sensor, one or more eye trackers, and a display system processor. The display devices are coupled together to form a cube having an inner volume. Each display device includes a touch sensitive display and an associated display controller, and each touch sensitive display at least partially defines a different side of the cube. The location sensor is disposed within the inner volume, and is configured to sense a location of the cube and supply location data indicating the location. The one or more eye trackers are coupled to the cube and are configured to sense location and movement of a user's eye and supply eye tracking data representative thereof. The display system processor is disposed within the inner volume and is in operable communication with each display controller, with the location sensor, and with the one or more eye trackers. The display system processor is configured to individually communicate with each one of the display controllers, is coupled to receive the location data and, in response thereto, to selectively command each display controller to render, on its associated touch sensitive display, a user interface associated with a sensed location, and is coupled to receive the eye tracking data and, in response thereto, to selectively (i) determine at which of the plurality of displays a user is gazing and (ii) activate only the display at which the user is gazing.

In yet another embodiment, an adaptive polyhedral display device includes at least five display devices, a location sensor, a wireless network interface, a hardware interface, one or more eye trackers, and a display system processor. Each display device is coupled together to form a cube having an inner volume. Each display device includes a touch sensitive display and an associated display controller, and each touch sensitive display is at least partially defining a different side of the cube. The location sensor is disposed within the inner volume, and is configured to sense a location of the cube and supply location data indicating a structure type in which the cube is located and a specific location within the structure type. The wireless network interface is disposed within the inner volume, and the hardware interface is disposed within one of the sides of the cube. The one or more eye trackers are coupled to the cube and are configured to sense location and movement of a user's eye and supply eye tracking data representative thereof. The display system processor is disposed within the inner volume and is in operable communication with each display controller, with the location sensor, with the one or more eye trackers, with the wireless network interface, and with the hardware interface. The display system processor is configured to individually communicate with each one of the display controllers, is coupled to receive the location data and, in response thereto, to selectively command each display controller to render, on its associated touch sensitive display, a user interface associated with a sensed location, and is coupled to receive the eye tracking data and, in response thereto, to selectively (i) determine at which of the plurality of displays a user is gazing and (ii) activate only the display at which the user is gazing.

Furthermore, other desirable features and characteristics of the display system will become apparent from the subsequent detailed description and the appended claims, taken in conjunction with the accompanying drawings and the preceding background.

### BRIEF DESCRIPTION OF THE DRAWINGS

The present invention will hereinafter be described in conjunction with the following drawing figures, wherein like numerals denote like elements, and wherein:
FIG. 1 depicts an exploded view of one embodiment of an adaptive polyhedral display device;
FIG. 2 depicts one embodiment of the adaptive polyhedral display device of FIG. 1 being held in the hand of a human user;
FIG. 3 depicts various non-limiting examples of suitable polyhedron shapes that could be used to implement the adaptive polyhedral display device of FIG. 1;
FIG. 4 depicts a functional block diagram of one embodiment of the adaptive polyhedral display device of FIG. 1;
FIG. 5 depicts a representation of the application software that may be used to implement the functionality of the adaptive polyhedral display device of FIG. 1;
FIG. 6 depicts a set of tables that may be included in the configuration database depicted in FIG. 5;
FIG. 7 depicts one example of possible linkages between the tables depicted in FIG. 6;
FIGS. 8-13 depict various examples of different devices and systems controlled by, and different user interfaces and images displayed on, one embodiment of the adaptive polyhedral display device of FIG. 1.

### DETAILED DESCRIPTION

The following detailed description is merely exemplary in nature and is not intended to limit the invention or the application and uses of the invention. As used herein, the word "exemplary" means "serving as an example, instance, or illustration." Thus, any embodiment described herein as "exemplary" is not necessarily to be construed as preferred or advantageous over other embodiments. All of the embodiments described herein are exemplary embodiments provided to enable persons skilled in the art to make or use the invention and not to limit the scope of the invention which is defined by the claims. Furthermore, there is no intention to be bound by any expressed or implied theory presented in the preceding technical field, background, brief summary, or the following detailed description.

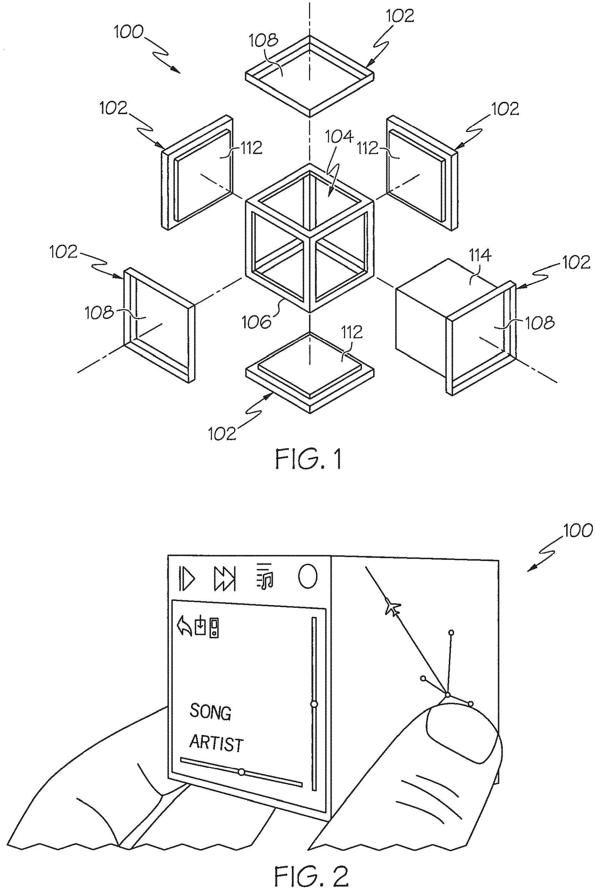

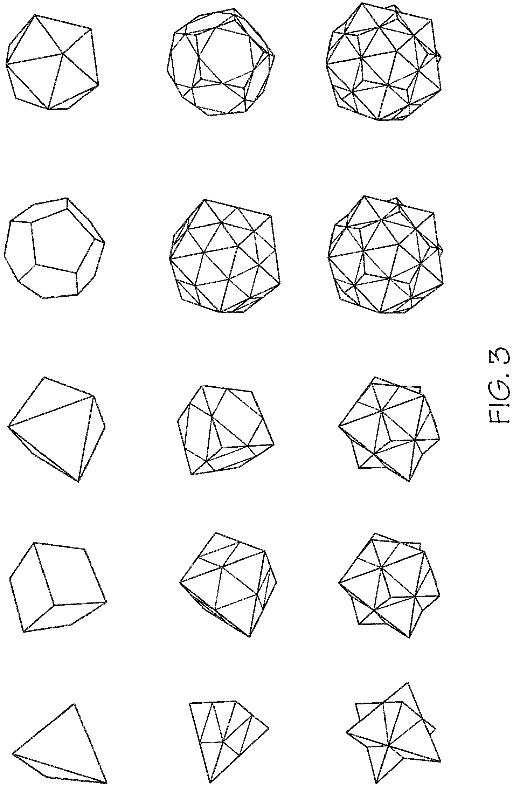

Referring first to FIG. 1, an exploded view of one embodiment of an adaptive polyhedral display device 100 is depicted. The adaptive polyhedral display device 100 includes a plurality of display devices 102 that, when coupled together, form a polyhedron structure having an inner volume 104. In the depicted embodiment, the display devices 102 are coupled together via a polyhedron-shaped frame 106. It will be appreciated that in other embodiments the display devices 102 could be directly coupled together. In the depicted embodiment, the polyhedron-shaped frame 106, and thus the polyhedron structure that is formed, is cubic. Moreover, the adaptive polyhedral display device 100 is preferably dimensioned to be held in the hand of a human user, and more preferably, as FIG. 2 depicts, between two or more fingers of a human user's hand 202. It will be appreciated that in some embodiments, the polyhedron structure may be any one of numerous, non-cubic polyhedrons, and may or may not be dimensioned to be held in the hand of a human user. For completeness, some non-limiting examples of other suitable polyhedrons are depicted in FIG. 3.

Returning to FIG. 1, and regardless of the specific polyhedron shape that is formed, each display device 102 includes a touch sensitive display 108 and an associated display controller 112. Each of the touch sensitive displays 108 at least partially define a different side of the polyhedron structure 106. In some embodiments, every side of the polyhedron structure 106 is at least partially defined by a touch sensitive display 108, and in other embodiments one of the sides of the polyhedron structure 106 may be defined by one or more devices that are not a touch sensitive display 108. Thus, for an N-sided polyhedron structure 106, the adaptive polyhedral display device 100 may include N-number of touch sensitive display 108 or (N-1) number of touch sensitive displays. Stated another way, at least N-number of display devices 102 may be coupled together to form a polyhedron structure 106 having at least (N+1) sides. So, for example, in the depicted embodiment, in which the polyhedron structure 106 that is formed is a cube (i.e., a 6-sided polyhedron), the adaptive polyhedral display system 100 may include at least 5 touch sensitive displays 108 - one associated with a different side of the cube. As may be appreciated, in other embodiments, in which the polyhedron structure is non-cubic, the display system 100 will include more or less than this number touch sensitive displays 108. Although the type of touch sensitive display 108 may vary, in the depicted embodiment, each touch sensitive display 108 is implemented using a capacitive touch sensitive display.

As noted above, each display device 102 also includes a display controller 112. This allows each touch sensitive display 108 to be independently configured and operated. Thus, each touch sensitive display 108 or, in other words, each face of the polyhedron structure, may implement a different control function. Each display controller 112 is in operable communication with a display system processor 114. The display system processor 114, which is disposed in the inner volume 104, is configured to individually communicate with each display controller 112 and to command each display controller 112 to render, on its associated touch sensitive display 108, various images, such as a user interface. As will be described further below, each user interface that is rendered is preferably associated with a sensed location of the display system 100.

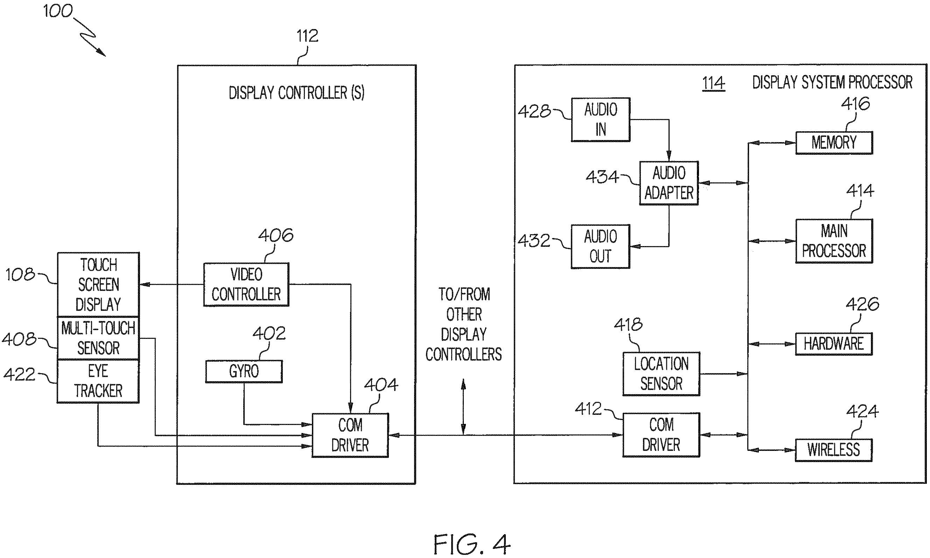

Turning now to FIG. 4, a functional block diagram of one embodiment of the adaptive polyhedral display device 100, depicting more detailed implementations of one embodiment of each of the display system controllers 112 and one embodiment of the display system processor 114, is provided and will now be described. The depicted display system controllers 112 each include a gyroscope 402, a display communication driver 404, and a video controller 406. The gyroscope 402 is configured to sense the orientation of the touch sensitive display 108 and supply sensor data indicative thereof to the display communication driver 404.

The display communication driver 404 is in operable communication with the gyroscope 402, the video controller 406, the display system processor 114, and with its associated touch sensitive display 108. As depicted, each touch sensitive display 108 includes a multi-touch sensor 408 that is configured to sense user interactions with the user interface that is rendered on the touch sensitive display 108. Based on the user interactions, the multi-touch sensor 408, using known techniques, generates and supplies, for example, touch coordinate data to the display communication driver 404. The display communication driver 404 receives the sensor data and the coordinate data, and supplies these data to the display system processor 114. The display communication driver 404 also receives commands from the display system processor 114, and supplies these commands to the video controller 406.

The video controller 406 is coupled to receive the commands from the display communication driver 402. The video controller 406 is configured, in response to these signals and commands, to command the touch sensitive display 108 to render various images. Such images include, for example, a user interface, one or more videos, one or more still images, and various other data, just to name a few.

The display system processor 114, as noted above, is disposed within the inner volume 104 of the polyhedron structure 106 and is in operable communication with each display controller 112. In the depicted embodiment, the display system processor 114 includes a system communication driver 412, a main processor 414, and memory 416. The system communication driver 412 is in operable communication with each of the display communication drivers 404 and with the main processor 414. The system communication driver 412 is configured to receive and transmit data and commands to and from each display communication driver 404, and to receive and transmit data and commands to and from the main processor 414.

The main processor 414 is coupled to receive data from a plurality of data sources and is configured, in response to at least some of the received data, to supply commands that, when supplied to the appropriate display controller 112, will cause the display controller 112 to render, on its associated touch sensitive display 108, a user interface. Preferably, and as noted above, the user interface that each touch sensitive display 108 renders is associated with the location of the adaptive polyhedral display device 100. Moreover, at least in some embodiments, the main processor 414 is further configured to selectively activate and deactivate the plurality of display devices 102 based on the display device 102 that the user is currently gazing.

To implement the above-described functions, the main processor 414 is configured to receive and process location data and eye tracking data. The location data are supplied from a location sensor 418, and the eye tracking data are supplied from a plurality of eye trackers 422. The location sensor 418 is disposed within the inner volume 104 and is configured to sense the location of the polyhedron structure 102 and supply location data indicating the sensed location. It will be appreciated that the location sensor 418 may be implemented using any one of numerous known devices for providing data representative of a physical location. For example, the location sensor 418 may be implemented using a global positioning system (GPS) sensor, or one or more inertial sensors, or it may be implemented using a wireless network interface 424.

It should be noted that the location data typically indicates at least the structure type in which the adaptive polyhedral display device 100 is located. Some examples of structure types include a user's home, a particular aircraft, a particular motor vehicle, and a particular building, just to name a few. In some embodiments, the location data may further include data indicating a specific location within the structure type. For example, if the structure type is a user's home, the location data may indicate that the adaptive polyhedral display device 100 is in a particular room within the home. If the structure type is an aircraft, the location data may indicate that the adaptive polyhedral display device 100 is in a specific cabin within the aircraft. If the structure type is a specific building, the location data may indicate that the adaptive polyhedral display device 100 is in a specific portion of the building.

The eye trackers 422 are coupled to the polyhedron structure 102 and are configured to sense the location and movement of a user's eye, and to supply eye tracking data representative thereof to the main processor 414. Preferably, the main processor 414, in response to the eye tracking data, determines which of the plurality of touch sensitive displays 108 a user is gazing at, and then activates only that touch sensitive display 108. In this manner, unintentional and/or inadvertent touches of touch sensitive displays 108 can be avoided.

As FIG. 4 further depicts, the adaptive polyhedral display device 100 may additionally include various other interfaces/devices. For example, the adaptive polyhedral display device 100, at least in the depicted embodiment, includes the above-mentioned wireless network interface 424, a hardware interface 426, an audio input device 428, and an audio output device 432. The wireless network interface 424 is disposed within the inner volume 104 and is in operable communication with the main processor 414 and is configured to implement wireless communication with various devices over a wireless network 434. The hardware interface 426, which is preferably disposed in one of the sides of the polyhedron structure, is in operable communication with the display system processor 414, and is configured to facilitate communication with various device via a wired connection. The hardware interface 426 may be, for example, a USB interface.

The audio input device 428, which may be implemented using any one of numerous know devices, such as a microphone, is disposed within one of the sides of the polyhedron structure, and is configured to receive audio input from a user. The audio output device 432, which may be implemented using any one of numerous known devices, such as a speaker, is also disposed within one of the sides of the polyhedron structure, and is configured to emit audio. The audio input device 428 and audio output device 432 are both in operable communication with an audio adapter 434. The audio adapter, which is preferably disposed within the inner volume 104, is also in operable communication with the display system processor 414.

The display system processor 114 additionally includes memory 436. Although shown separate from the main processor 414, it will be appreciated that some or all of the memory may be on-board the main processor 414. In either case, the memory 436 preferably has application software and various software modules stored therein. The application and software modules work together to implement the overall functionality of the adaptive polyhedral display device 100. The application and software modules work together to, for example, poll various interrupts that identify the particular display 108 that is generating an interrupt, process user interactions, frame requests using appropriate network protocols associated with the network, processes any feedback/acknowledgements received from the network, and transmits commands to the touch screen displays 108.

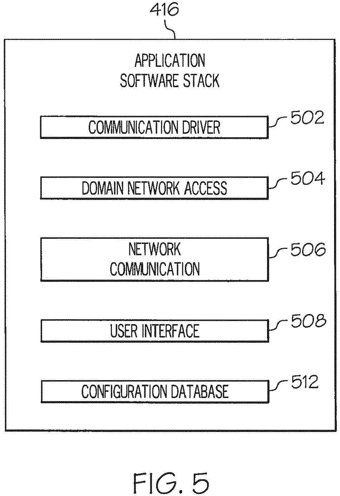

Referring now to FIG. 5, the application software, in one embodiment, includes at least a communication driver module 502, a domain network module 504, a network communication module 506, a user interface module 508, and a configuration database 512. The communication driver module 502 provides for communication between the display system processor 114 and each of the display controllers 112. Interrupts generated by the touch screen displays 108 are processed by the stack communication driver module to determine the touch coordinates and identify the specific touch screen display 108 from whence the touches are generated. The touch coordinates are transmitted to the application software for further processing.

The domain network module 504 includes data regarding the devices to be remotely controlled within a defined area/network. The defined area/network can be a home network for personal use, hotspots for use within vehicles, an Ovation Network for use within aircraft cabins, etc. The domain network module 504 works with the network communication module 506 to provide for communication with various devices in the defined area/network. The network communication module 506 includes the appropriate drivers/software needed communicate over the defined area/network, maintains all the messages received, and to be sent, in a queue, and handles sending and receiving commands as network packets via the wireless network interface 424.

The user interface module 508 implements the functionality of the user interactions with the adaptive polyhedral display device 100. The user interactions include touch interactions, via touch sensitive displays 108, and voice-based interactions, via the audio input device 428 and the audio adapter 534.

The configuration database 508 has user preference data stored therein. The user preference data indicates at least one or more user preferences. The user preferences may vary, but are preferably used by the main processor 414 to configure the adaptive polyhedral display device 100 to specific user preferences. For example, the user preference data may indicate which user interfaces or other images to display on each of the touch screen displays 108 at each of the various locations that the user may carry the adaptive polyhedral display device 100. This allows users to transport the adaptive polyhedral display device 100 from location-to-location and the personal preferences will adapt to each location. In some embodiments, the user preference data may also include data for a default configuration, which may have relatively minimal functions, for instances when, for example, a location cannot be identified. In other embodiments, when a location cannot be identified, the adaptive polyhedral display device 100 may remain in the most recently used configuration.

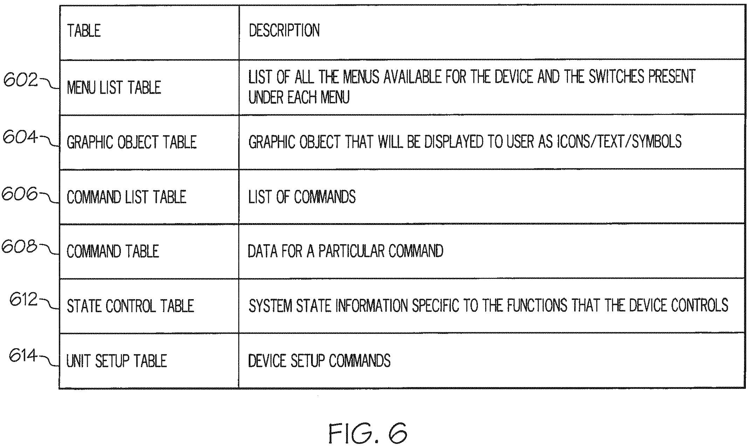

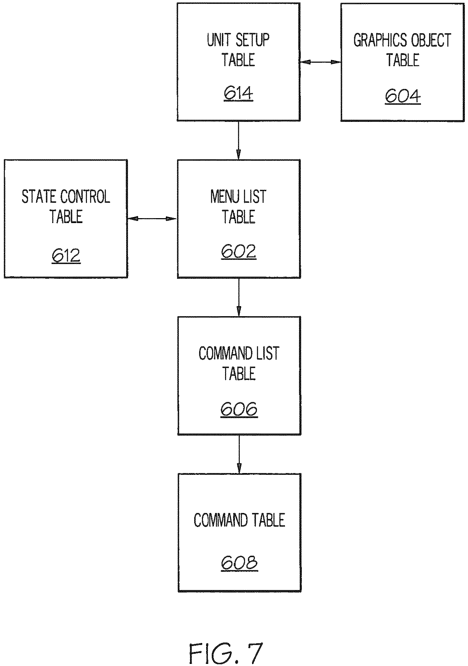

It will be appreciated that the configuration database 508 may be variously configured and implemented. In one particular embodiment, however, the configuration database 508 comprises multiple tables, each having multiple fields and records. One example of a set of tables that may be included in the configuration database 508, and the descriptions of each table, is depicted in tabular form in FIG. 6. Preferably, the tables are linked together such that, when a user selects a function to control, all the data required for the processing, sending and receiving commands, and updating each touch screen display 108 can be queried and fetched from the tables using an index and links into other tables. One example of possible linkages between the tables depicted in FIG. 6 is illustrated in FIG. 7.

The Menu List Table 602 specifies the functions that will be available on each face of the adaptive polyhedral display device 100, or more specifically, on each touch screen display 108. The Graphic Object Table 604 specifies the location where, for example, various icons should be positioned on each touch screen display 108, along with the dimensions of the icons. The Command List Table 606 specifies the commands related to displayed icons that are touched by a user. If, for example, a user touch requires any update on the touch screen display 108, which is defined by configuration, the new objects are fetched from Graphic Object Table 604 and displayed on the touch screen display 108.

The Command Table 608 specifies the data for each of the commands associated with each icon in the Command List Table 606. System state information specific to the functions and devices that the adaptive polyhedral display device 100 is specified and updated in the State Control Table 612. Upon receiving commands or command responses, the corresponding function is fetched from the Unit Setup Table 614, the state is updated in State Control Table 612, and the corresponding user interface is modified by obtaining the corresponding graphics from Graphic Object Table 604.

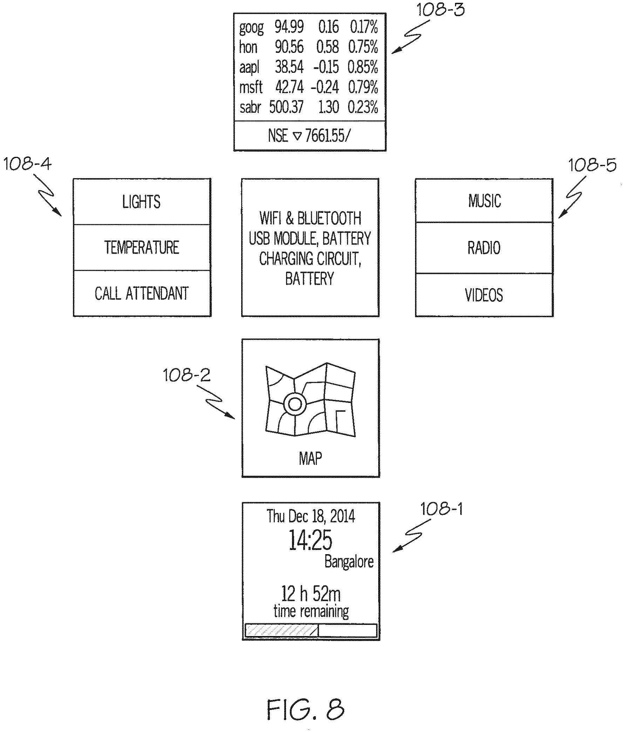

As repeatedly noted herein, the adaptive polyhedral display device 100 can be used to control various devices at various locations using user interfaces displayed on various ones of the touch screen displays 108. The adaptive polyhedral display device 100 can also be configured to display different images and data one various ones of the touch screen displays 108. Both of these functions can be tailored to different users via the user configuration data. For completeness, and to provide one example of the different devices and systems controlled by, and the different user interfaces and images displayed on, the adaptive polyhedral display device 100, reference should now be made to FIGS. 8-13. The figures depict an example embodiment of the adaptive polyhedral display device 100 being configured for use in an aircraft cabin.

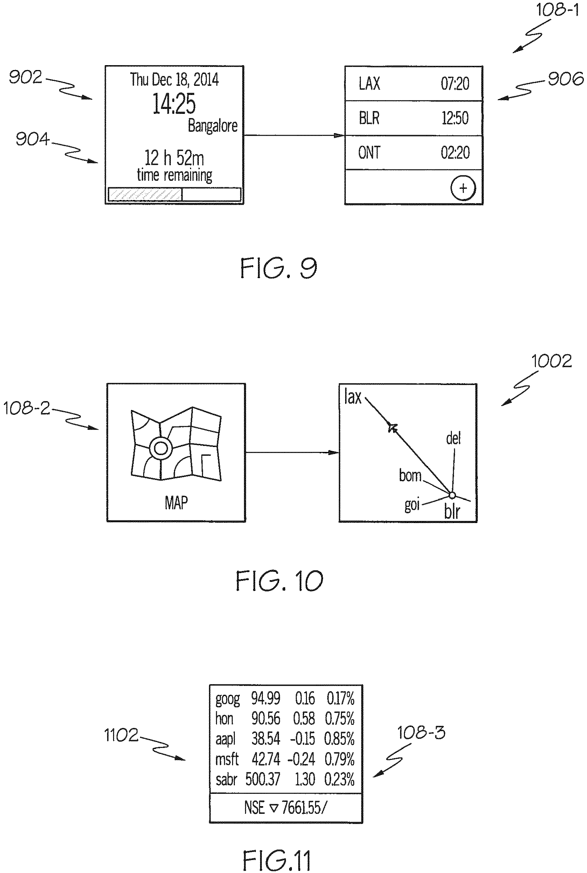

Referring first to FIG. 8, the depicted adaptive polyhedral display device 100 is configured as a cube, with 6 different sides. Five of the sides are implemented using touch screen displays 108, and one side includes no displays or controls, but includes various interfaces. Each of the touch screen displays 108 is configured to display information or to display and implement a different user interface that is used to control different types of devices/systems. In the depicted embodiment, a first touch screen display 108-1 is configured to display time-to-destination information and various related time information. As FIG. 9 depicts, the user interface for this display 108-1, the current date and time at the destination 902 is displayed, along with the remaining time-to-destination 904. This user interface can also be used to display the current time 906 at various locations around the globe.

A second touch screen display 108-2 is configured to display map and, as shown more clearly in FIG. 10, current position information 1002. A third touch screen display 108-3 is configured to display news or stock information. In the depicted embodiment, and as shown most clearly in FIG. 11, the third touch screen display 108-3 is displaying a stock ticker 1102 associated with various stocks of interest to the user. A fourth touch screen display 108-4 is configured to implement an aircraft cabin controls user interface, and a fifth touch screen display 108-5 is configured to implement an entertainment system controls user interface.

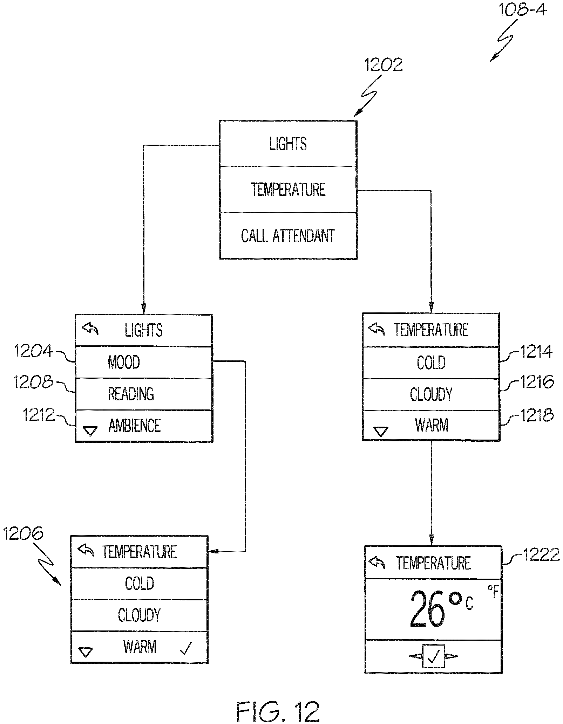

Referring to FIG. 12, the aircraft cabin controls user interface 1202 is configured to allow the user to control lighting and temperature within the cabin, and to call an in-flight attendant. As FIG. 12 also depicts, the lighting in the cabin can be controlled according to mood 1204, with the mood having various "temperatures" 1206 associated therewith. Alternatively, the lighting can be adjusted for reading 1208 or for ambience 1212. The temperature within the cabin has various settings 1214-1218, which can be used to automatically or manually adjust the cabin temperature to a desired setting 12225.

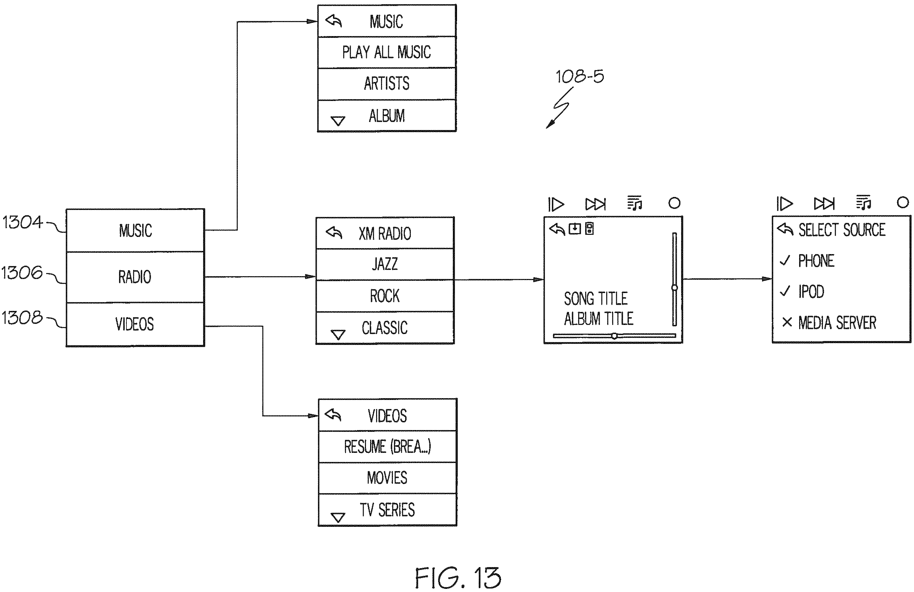

The entertainment system controls user interface 1302, which is shown more clearly in FIG. 13, is configured to allow the user to control various entertainment devices that may be installed or disposed within the cabin. Although these devices may vary, in the depicted embodiment these include a music player 1304, a radio 1306 (e.g., a satellite radio), and a video player 1308.

As noted above, one side of the adaptive polyhedral display device 100 is no implemented using a touch screen display 108. Rather, it includes various interfaces. Although the various interfaces may vary, in the depicted embodiment these include the wireless network interface 424 (e.g., WiFi and/or Bluetooth), a hardware interface 426 (e.g., USB interface), a battery charging interface, and may also include the audio input device 428, and the audio output device 432.

The adaptive polyhedral display device 100 described herein is readily navigable, is adaptable to various locations, and is adaptable to varied user preferences.

Those of skill in the art will appreciate that the various illustrative logical blocks, modules, circuits, and algorithm steps described in connection with the embodiments disclosed herein may be implemented as electronic hardware, computer software, or combinations of both. Some of the embodiments and implementations are described above in terms of functional and/or logical block components (or modules) and various processing steps. However, it should be appreciated that such block components (or modules) may be realized by any number of hardware, software, and/or firmware components configured to perform the specified functions. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present invention. For example, an embodiment of a system or a component may employ various integrated circuit components, e.g., memory elements, digital signal processing elements, logic elements, look-up tables, or the like, which may carry out a variety of functions under the control of one or more microprocessors or other control devices. In addition, those skilled in the art will appreciate that embodiments described herein are merely exemplary implementations.

The various illustrative logical blocks, modules, and circuits described in connection with the embodiments disclosed herein may be implemented or performed with a general purpose processor, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. A general-purpose processor may be a microprocessor, but in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration.

The steps of a method or algorithm described in connection with the embodiments disclosed herein may be embodied directly in hardware, in a software module executed by a processor, or in a combination of the two. A software module may reside in RAM memory, flash memory, ROM memory, EPROM memory, EEPROM memory, registers, hard disk, a removable disk, a CD-ROM, or any other form of storage medium known in the art. An exemplary storage medium is coupled to the processor such that the processor can read information from, and write information to, the storage medium. In the alternative, the storage medium may be integral to the processor. The processor and the storage medium may reside in an ASIC.

In this document, relational terms such as first and second, and the like may be used solely to distinguish one entity or action from another entity or action without necessarily requiring or implying any actual such relationship or order between such entities or actions. Numerical ordinals such as "first," "second," "third," etc. simply denote different singles of a plurality and do not imply any order or sequence unless specifically defined by the claim language. The sequence of the text in any of the claims does not imply that process steps must be performed in a temporal or logical order according to such sequence unless it is specifically defined by the language of the claim. The process steps may be interchanged in any order without departing from the scope of the invention as long as such an interchange does not contradict the claim language and is not logically nonsensical.

Furthermore, depending on the context, words such as "connect" or "coupled to" used in describing a relationship between different elements do not imply that a direct physical connection must be made between these elements. For example, two elements may be connected to each other physically, electronically, logically, or in any other manner, through one or more additional elements.

While at least one exemplary embodiment has been presented in the foregoing detailed description of the invention, it should be appreciated that a vast number of variations exist. It should also be appreciated that the exemplary embodiment or exemplary embodiments are only examples, and are not intended to limit the scope, applicability, or configuration of the invention in any way. Rather, the foregoing detailed description will provide those skilled in the art with a convenient road map for implementing an exemplary embodiment of the invention. It being understood that various changes may be made in the function and arrangement of elements described in an exemplary embodiment without departing from the scope of the invention as set forth in the appended claims.

## Claims

1. An adaptive polyhedral display device, comprising:
at least N-number of display devices coupled together to form a polyhedron structure, the polyhedron structure having at least (N+1) sides and having an inner volume, each display device including a touch sensitive display and an associated display controller, each touch sensitive display at least partially defining a different one of the sides of the polyhedron structure;
a location sensor disposed within the inner volume, the location sensor configured to sense a location of the polyhedron structure and supply location data indicating the location; and
a display system processor disposed within the inner volume and in operable communication with each display controller and coupled to receive the location data from the sensor, the display system processor configured to individually communicate with each one of the display controllers and, in response to the location data, to command each display controller to render, on its associated touch sensitive display, a user interface associated with a sensed location.

2. The adaptive polyhedral display device of claim 1, wherein:
the location data further includes data indicating a structure type in which the polyhedron structure is located.

3. The adaptive polyhedral display device of claim 2, wherein the location data further includes data indicating a specific location within the structure type.

4. The adaptive polyhedral display device of claim 1, further comprising:
one or more eye trackers coupled to the polyhedron structure and configured to sense location and movement of a user's eye and supply eye tracking data representative thereof,
wherein the display system processor is further coupled to receive the eye tracking data and is configured, in response thereto, to selectively activate and deactivate the plurality of display devices.

5. The adaptive polyhedral display device of claim 4, wherein the display system processor is further configured, in response to the eye tracking data, to (i) determine at which of the plurality of displays a user is gazing and (ii) activate the display at which the user is gazing.

6. The adaptive polyhedral display device of claim 1, further comprising:
memory having user preference data stored therein, the user preference data indicating at least a user's preferences.

7. The adaptive polyhedral display device of claim 1, further comprising:
wireless network interface disposed within the inner volume and in operable communication with the display system processor.

8. The adaptive polyhedral display device of claim 1, further comprising:
a hardware interface in operable communication with the display system processor and disposed within one of the sides of the polyhedron structure.

9. The display device of claim 1, further comprising:
an audio input device disposed within one of the sides of the polyhedron structure;
an audio output device disposed within one of the sides of the polyhedron structure;
an audio adapter disposed within the inner volume and in operable communication with the audio input device, the audio output device, and the display system processor.

10. The adaptive polyhedral display device of claim 1, wherein each display controller comprises a video controller and a communication driver.

11. The adaptive polyhedral display device of claim 1, wherein the polyhedron structure is a cube.
